# EUROPÄISCHE PATENTSCHRIFT

(11) **EP 4 166 719 B1**
(45) Veröffentlichungstag und Bekanntmachung des Hinweises auf die Patenterteilung: **14.08.2024**
(21) Anmeldenummer: 22201541.4
(22) Anmeldetag: 14.10.2022
(51) Int. Cl.: E01C 23/088

(54) **BAUMASCHINE**
CONSTRUCTION MACHINERY
MACHINE DE CONSTRUCTION

(30) Priorität: 14.10.2021 DE 102021126709
(43) Veröffentlichungstag der Anmeldung: 19.04.2023
(73) Patentinhaber: Wirtgen GmbH, 53578 Windhagen (DE)
(72) Erfinder: Jung, Frank, 53639 Königswinter (DE); Preis, Willi, 53604 Bad Honnef (DE)
(74) Vertreter: dompatent von Kreisler Selting Werner - Partnerschaft von Patent- und Rechtsanwälten mbB

(56) Entgegenhaltungen:
- EP-A2- 1 637 377
- EP-B1- 2 450 213
- US-A1- 2019 161 131

## Beschreibung

Die Erfindung betrifft eine Baumaschine nach Anspruch 1.

Es sind beispielsweise aus der US 2019/161131 A1 Baumaschinen bekannt, die einen von Fahreinrichtungen getragenen Maschinenrahmen, einen an dem Maschinenrahmen angeordneten Bedienstand und ein an dem Bedienstand angeordnetes, mit Hilfe einer Teleskopführungseinheit höhenverstellbares Schutzdach aufweisen. Die Teleskopführungseinheit hat üblicherweise zumindest ein erstes Teleskopelement und ein zweites Teleskopelement, wobei das erste Teleskopelement zumindest teilweise in dem zweiten Teleskopelement führbar ist. Ferner ist zumindest eine Antriebseinheit vorgesehen zum Auf- und Abbewegen des Schutzdaches durch Bewegen des ersten Teleskopelements gegenüber dem zweiten Teleskopelement.

Bei solchen verstellbaren Schutzdächern besteht häufig das Problem, dass es bei Bewegung an der Baumaschine zum Wackeln und Klappern des Schutzdaches kommen kann. Um dies zu umgehen wird bei dem bisherigen Stand der Technik eine konstruktiv aufwendige Teleskopführungseinheit mit Führungsstücken vorgesehen.

Der Erfindung liegt daher die Aufgabe zugrunde, eine relativ einfache konstruktive Lösung zum Verstellen des Schutzdaches zu schaffen, wobei ein Wackeln und Klappern des Schutzdaches vermindert wird.

Zur Lösung dieser Aufgabe dienen die Merkmale des Anspruchs 1.

Die Erfindung sieht in vorteilhafter Weise vor, dass zumindest eine Aussparung im ersten Teleskopelement und zumindest ein Rastelement vorgesehen sind, wobei das Rastelement um eine Schwenkachse am zweiten Teleskopelement schwenkbar angeordnet ist und derart geformt ist, dass durch Bewegen des ersten Teleskopelements gegenüber dem zweiten Teleskopelement in eine erste Richtung ein erster Teil des Rastelements in die Aussparung verschwenkbar ist und ein zweiter Teil des Rastelements von außen gegen die Außenseite des ersten Teleskopelements drückt.

Die vorliegende Erfindung hat einerseits den Vorteil, dass das Rastelement an dem zweiten Teleskopelement angeordnet ist und dadurch nicht verloren gehen kann, und andererseits, dass das Rastelement eine Kraft von außen auf die Außenseite des ersten Teleskopelements ausübt und somit ein mögliches Wackeln und Klappern der Teleskopführungseinheit verringert wird.

In der eingerasteten Position kann der erste Teil des Rastelements in der Aussparung sein und der zweite Teil des Rastelements derart gegen das erste Teleskopelement drücken, dass das erste Teleskopelement in dem zweiten Teleskopelement verkantet bzw. verspannt werden kann.

Das Verkanten des ersten Teleskopelements in dem zweiten Teleskopelement hat den Vorteil, dass das Wackeln und Klappern der Teleskopführungseinheit verringert wird.

Sobald das Rastelement in der eingerasteten Position ist, ist eine weitere Bewegung des ersten Teleskopelements gegenüber dem zweiten Teleskopelement in eine erste Richtung nicht mehr möglich, da der zweite Teil des Rastelements bereits gegen die Außenseite des ersten Teleskopelements drückt und somit einer weitere Schwenkbewegung des Rastelements nicht möglich ist. Das erste Teleskopelement befindet sich sozusagen in einer Anschlagposition. Sofern eine zusätzliche Kraft auf das erste Teleskopelement in die erste Richtung ausgeübt wird, erhöht dies lediglich die Kraft die das erste Teleskopelement auf den ersten Teil des Rastelements ausübt und damit wird auch indirekt die Kraft erhöht mit der der zweiten Teil des Rastelements gegen die Außenseite des ersten Teleskopelements drückt.

Zum Verstellen des ersten Teleskopelements gegenüber dem zweiten Teleskopelement kann das Rastelement in eine Verstellposition verschwenkbar sein, in der einerseits der erste Teil des Rastelements aus der Aussparung herausgeschwenkt ist und der zweite Teil des Rastelements nicht gegen die Außenseite des ersten Teleskopelements drückt, so dass das erste Teleskopelement innerhalb des zweiten Teleskopelements mit Spiel führbar ist.

Dadurch, dass das erste Teleskopelement zumindest teilweise in dem zweiten Teleskopelements mit Spiel führbar ist, kann das erste Teleskopelement relativ einfach gegenüber dem zweiten Teleskopelement verstellt werden. Selbst wenn Dreck oder Ähnliches in die Teleskopführungseinheit gerät, kann aufgrund des Spiels weiterhin eine Verstellung des ersten Teleskopelements gegenüber dem zweiten Teleskopelement erfolgen.

Zum Verschwenken des Rastelements von der eingerasteten Position in die Verstellposition kann der erste Teil des Rastelements, die Schwenkachse und der zweite Teil des Rastelements derart zueinander angeordnet sein, und der erste Teil des Rastelements eine derartige Kontur aufweisen, dass durch Bewegen des ersten Teleskopelements gegenüber dem zweiten Teleskopelement in eine der ersten Richtung entgegengesetzte zweite Richtung der erste Teil des Rastelements aus der Aussparung herausschwenkt und in die Verstellposition verschwenkt.

Dies hat den Vorteil, dass das erste Teleskopelement auf sehr einfache Art und Weise gegenüber dem zweiten Teleskopelement in eine der ersten Richtung entgegengesetzte zweiten Richtung verstellt werden kann. Das Rastelement begibt sich alleine durch die Verstellung in die zweite Richtung in die Verstellposition.

Dies ist vorteilhaft gegenüber dem bisherigen Stand der Technik, bei dem üblicherweise ein Bolzen eingeführt wird, der egal ob das Teleskopelement nun in die erste Richtung oder die zweite Richtung verstellt wird vorher herausgezogen werden musste.

Zum Verschwenken des Rastelements von der Verstellposition in die eingerastete Position kann das erste Teleskopelement gegenüber dem zweiten Teleskopelement in die erste Richtung bewegbar sein und der erste Teil des Rastelements kann, sobald das Rastelement auf der Höhe einer Aussparung ist, aufgrund des Eigengewichts und/oder aufgrund einer Federkraft eines Federelements in die Aussparung verschwenken.

Es kann ein Verstellelement, das vorzugsweise ein Hebelarm ist, mit dem Rastelement verbunden sein, mit dem das Rastelement von dem ersten Teleskopelement in eine Einfahrposition wegschwenkbar ist, bei der auch beim Bewegen des ersten Teleskopelements in die erste Richtung der erste Teil des Rastelements nicht in die Aussparung verschwenkt.

Wenn das Rastelement in der Einfahrposition ist, kann die Teleskopführungseinheit und damit das Schutzdach einfahrbar sein, ohne dass das Rastelement automatisch in die Aussparung verschwenkt.

Die erste Richtung, in der das Teleskopelement bewegbar ist, kann die gleiche Richtung sein, in die im Wesentlichen die Gewichtskraft wirkt, so dass in der eingerasteten Position die Gesamtgewichtskraft des ersten Teleskopelements und des mit diesem verbundenen Schutzdachs auf den ersten Teil des Rastelements einwirkt und das Rastelement in eine solche Richtung verschwenkt, dass der zweite Teil des Rastelements auf die Außenseite des ersten Teleskopelements drückt.

Innerhalb des zweiten Teleskopelements kann zumindest ein Führungselement vorgesehen sein, das das erste Teleskopelement in dem zweiten Teleskopelement führt.

Mittels des zumindest einen Führungselements kann das Spiel eingestellt werden, mit dem das erste Teleskopelement in dem zweiten Teleskopelement führbar ist.

Das zumindest eine Führungselement kann ein Gleitschuh und/oder eine Führungsrolle sein.

Das Schutzdach kann vorzugsweise in Bezug zu einer Längsachse des ersten Teleskopelements versetzt angeordnet sein. Dies hat den Vorteil, dass die Teleskopführungseinheit beispielsweise am hinteren Teil des Bedienstandes angeordnet sein kann und das Schutzdach sich über den gesamten Bedienstand erstreckt.

In der eingefahrenen Stellung der Teleskopführungseinheit befindet sich das Schutzdach in der tiefsten Stellung. In dieser Stellung kann die Baumaschine transportiert werden. Das Schutzdach kann in dieser Stellung mittels eines Schlosses gesichert werden. Dadurch kann der Bedienstand beispielsweise vor Vandalismus geschützt werden oder es kann beim Transport verhindert werden, dass Wind unter das Schutzdach gerät.

Das erste und auch das zweite Teleskopelement können Vierkantrohre sein.

Die Antriebseinrichtung kann eine hydraulische Antriebseinrichtung und/oder eine mechanische Antriebseinrichtung sein, die beispielsweise manuell betrieben wird. Dies kann beispielsweise eine Seilwinde sein.

Im Folgenden wird unter Bezugnahme auf die Zeichnungen ein Ausführungsbeispiel der vorliegenden Erfindung näher erläutert:
Es zeigen schematisch:
- Fig. 1: eine Baumaschine mit Schutzdach,
- Fig. 2: eine Teleskopführungseinheit mit Schutzdach,
- Fig. 3: eine Detailansicht aus Fig. 2
- Fig. 4: ein Rastelement,
- Fig. 5: das Rastelement aus Fig. 4 in der Einfahrposition,
- Fig. 6: eine Teleskopführungseinheit in eingefahrener Position, und
- Fig. 7: die Teleskopführungseinheit aus Fig. 6 in einer anderen Ansicht.

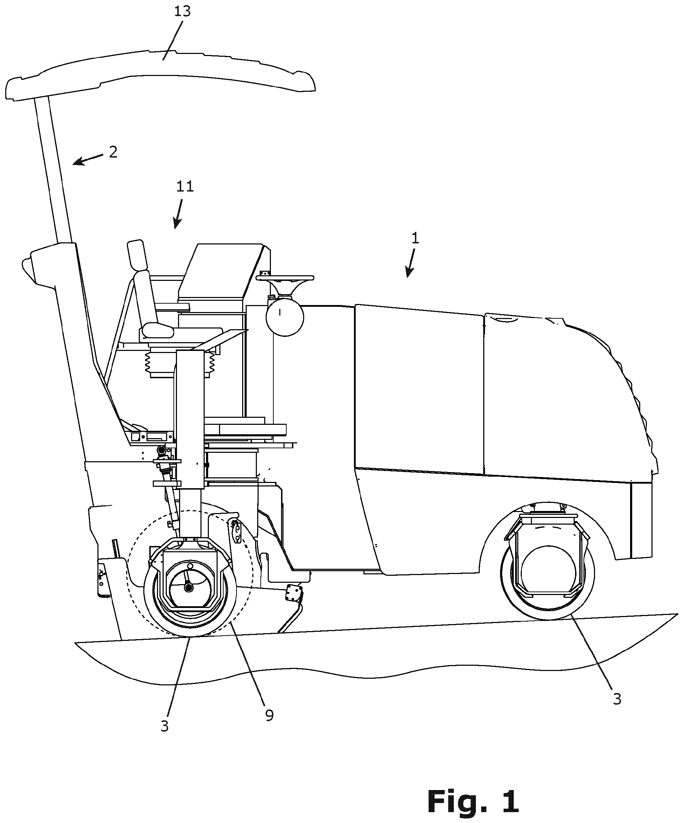

Fig. 1 zeigt eine Baumaschine zum Bearbeiten eines Bodenbelags. Die Baumaschine weist Fahreinrichtungen 3 auf. Die Fahreinrichtungen3 können Räder oder Kettenlaufwerke sein. Ferner weist die Baumaschine einen Maschinenrahmen 5 auf. Der Maschinenrahmen 5 ist mit den Fahreinrichtungen 3 vorzugsweise über Hubsäulen verbunden. Auf diese Weise kann der Abstand zwischen dem Maschinenrahmen 5 und dem Bodenbelag einstellbar sein.

Alternativ könnten die Fahreinrichtungen 3 auch starr mit dem Maschinenrahmen 5 verbunden sein.

An dem Maschinenrahmen 5 ist vorzugsweise eine Arbeitseinrichtung 9 angeordnet, mit der der Bodenbelag bearbeitet werden kann.

An dem Maschinenrahmen 7 ist ein Bedienstand 11 angeordnet. Auf dem Bedienstand 11 kann ein Fahrer stehen oder sitzen und die Baumaschine bedienen.

An dem Bedienstand 11 kann ein mit Hilfe einer Teleskopführungseinheit 2 höhenverstellbares Schutzdach 13 angeordnet sein.

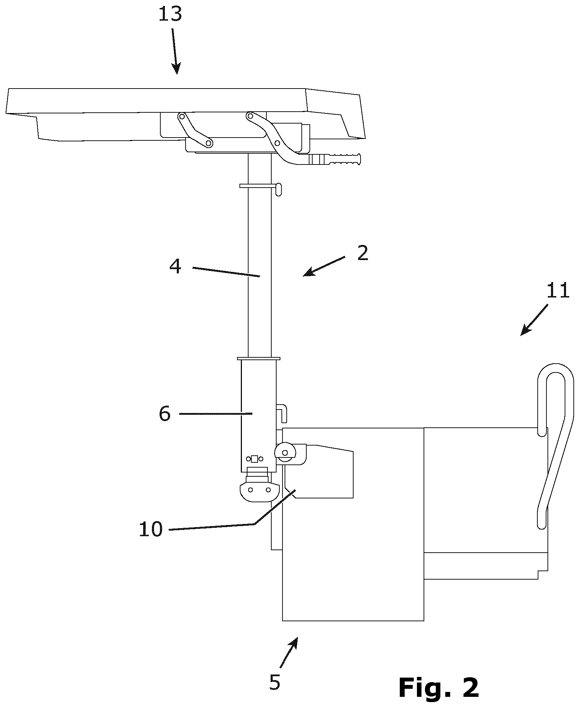

Aus Fig. 2 geht hervor, dass die Teleskopführungseinheit 2 zumindest ein erstes Teleskopelement 4 und ein zweites Teleskopelement 6 aufweist, wobei das erste Teleskopelement 4 in dem zweiten Teleskopelement 6 zumindest teilweise führbar ist.

Ferner ist eine Antriebseinrichtung 10 zum Auf- und Abbewegen des Schutzdaches 13 vorgesehen.

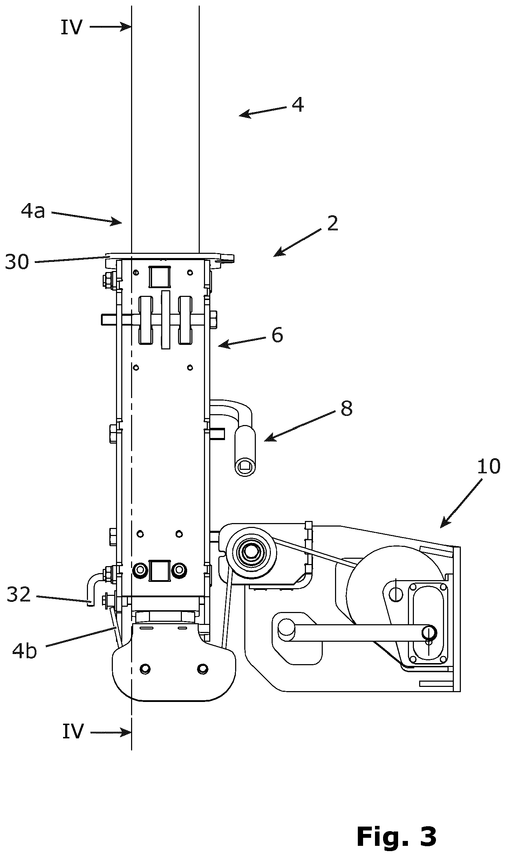

In Fig. 3 ist ein Ausschnitt aus Fig. 2 dargestellt, bei dem die Teleskopführungseinheit 2 und die Antriebseinrichtung 10 näher dargestellt sind. Die Teleskopführungseinheit 2 weist das erste Teleskopelement 4 und das zweites Teleskopelement 6 auf, wobei das erste Teleskopelement 4 zumindest teilweise in dem zweiten Teleskopelement 6 führbar ist. Das zweite Teleskopelement 6 ist vorzugsweise direkt oder indirekt mit dem Maschinenrahmen 5 verbunden.

Wenn das erste Teleskopelement 4 in dem zweiten Teleskopelement 6 führbar ist und das erste Teleskopelement 4 gegenüber dem zweiten Teleskopelement 6 verstellt wird, wird der Teil 4a, der an der Seite 30 des zweite Teleskopelements 6 gegenüber dem zweiten Teleskopelement 6 herausragt, verlängert oder verkürzt. Dadurch kann das Schutzdach gegenüber dem zweiten Teleskopelement 6 und damit gegenüber dem Maschinenrahmen 5 in der Höhe verstellt werden.

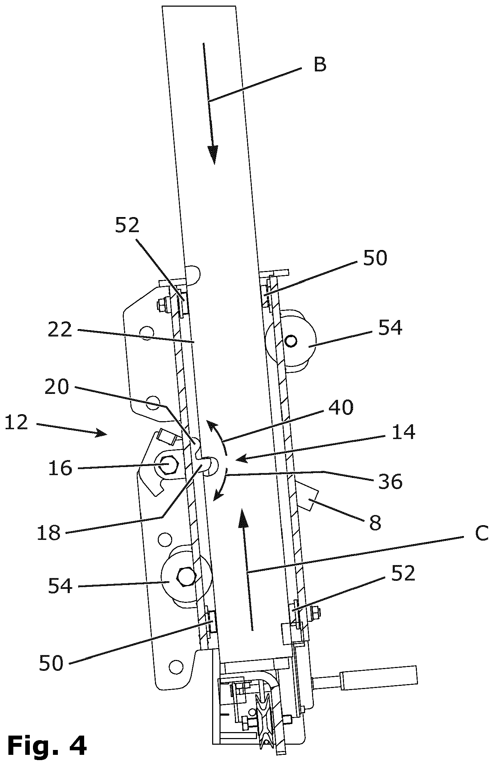

Fig. 4 zeigt eine Schnittansicht der Fig. 3 in der in Fig.3 dargestellten Richtung 4-4.

In Fig. 4 ist ein Rastelement 12 dargestellt. Das Rastelement 12 ist um eine Schwenkachse 16 schwenkbar an dem zweiten Teleskopelement 6 angeordnet. Das Rastelement 12 weist einen ersten Teil 18 und einen zweiten Teil 20 auf. Ferner weist das erste Teleskopelement 4 zumindest eine Aussparung 14 auf. Das Rastelement 12 ist derart geformt, dass durch Bewegen des ersten Teleskopelements 4 gegenüber dem zweiten Teleskopelement 6 in eine erste Richtung B der erste Teil 18 des Rastelements 12 in die Aussparung 14 verschwenkbar ist und der zweite Teil 20 des Rastelements 12 von außen gegen die Außenseite 22 des ersten Teleskopelements 4 drückt.

Wenn das erste Teleskopelement 4 gegenüber dem zweiten Teleskopelement 6 in Richtung B bewegt wird und die Aussparung 14 in Höhe des ersten Teils 18 des Rastelements 12 ist, verschwenkt das Rastelement 12 in Richtung 36 aufgrund der Gewichtskraft des Rastelements 12 und/oder aufgrund eines nicht dargestellten Federelements in die Aussparung 14. Der zweite Teil 20 des Rastelements 12 drückt dann gegen die Außenseite 22. Sobald das Rastelement 12 in der eingerasteten Position ist, ist eine weitere Bewegung des ersten Teleskopelements 4 gegenüber dem zweiten Teleskopelement 6 in eine erste Richtung B nicht mehr möglich, da der zweite Teil 20 des Rastelements 12 bereits gegen die Außenseite 22 des ersten Teleskopelements 4 drückt und somit einer weitere Schwenkbewegung des Rastelements 12 nicht möglich ist. Das erste Teleskopelement 4 befindet sich sozusagen in einer Anschlagposition. Sofern eine zusätzliche Kraft auf das erste Teleskopelement 4 in die erste Richtung B ausgeübt wird, erhöht dies lediglich die Kraft die das erste Teleskopelement 4 auf den ersten Teil 18 des Rastelements 12 ausübt und damit wird auch indirekt die Kraft erhöht mit der der zweiten Teil 20 des Rastelements 12 gegen die Außenseite 22 des ersten Teleskopelements 4 drückt.

Die erste Richtung B wirkt vorzugsweise im Wesentlichen in die gleiche Richtung, in der auch die Gewichtskraft wirkt, so dass in der eingerasteten Position die Gesamtgewichtskraft des ersten Teleskopelements 4 und des mit diesem verbundenen Schutzdachs 13 auf den ersten Teil 18 des Rastelements 12 einwirkt und das Rastelement 12 in die Richtung 36 verschwenkt wird, so dass der zweite Teil 20 des Rastelements 12 auf die Außenseite 22 des ersten Teleskopelements 4 drückt.

In der eingerasteten Position befindet sich der erste Teil 18 des Rastelements 12 in der Aussparung 14 und der zweite Teil 20 des Rastelements 12 wird derart gegen das erste Teleskopelement 4 gedrückt, dass das erste Teleskopelement 4 in dem zweiten Teleskopelement 6 verklemmt bzw. verkantet bzw. verspannt werden kann. Dies hat den Vorteil, dass Vibrationen und Klappern stark vermindert werden, da das erste Teleskopelement 4 in dem zweiten Teleskopelement 6 in dieser Position verkantet ist.

In den Fign. 3 und 4 ist ferner ein als Hebelelement ausgeführtes Verstellelement 8 dargestellt, dessen Funktion in den weiteren Figuren näher erläutert wird.

In Fig. 4 sind Führungselemente 50, 52, 54 dargestellt, die an dem zweiten Teleskopelement 6 angeordnet sind und das erste Teleskopelement 4 in dem zweiten Teleskopelement 6 führen. Die Führungselemente 50, 52 sind Gleitführungen und die Führungselemente 54 sind Führungsrollen. Die Führungselemente 52 sind verstellbar, so dass das Spiel einstellbar ist, mit dem das erste Teleskopelement 4 in dem zweiten Teleskopelement 6 führbar ist.

In Fig. 4 ist ferner eine zweite Richtung C dargestellt, die der ersten Richtung B entgegengesetzt ist. Wenn das erste Teleskopelement 4 gegenüber dem zweiten Teleskopelement 6 in die zweite Richtung C verstellt wird, verschwenkt das Rastelement 12 in die Drehrichtung 40, weil der erste Teil 18 des Rastelements 12 zusammen mit der Aussparung 14 in die zweite Richtung C bewegt wird. Dadurch verschwenkt das Rastelement 12 in die Drehrichtung 40. Dadurch schwenkt der zweite Teil 18 des Rastelements 12 aus der Aussparung 14 heraus und der zweite Teil 20 des Rastelements 12 auch von der Außenseite 22 weg. Das erste Teleskopelement 4 kann dann in der zweiten Richtung C beliebig verstellt werden bis das Schutzdach 13 die gewünschte Höhe erreicht hat. Wenn das Schutzdach 13 in der gewünschten Höhe ist, kann das Teleskopelement 4 wieder in die erste Richtung B geführt werden. Sobald dann der erste Teil 18 des Rastelements 12 auf der Höhe einer Aussparung 14 ist, kann der erste Teil 18 des Rastelements 12 wieder in eine Aussparung 14 verschwenken und der zweite Teil 20 des Rastelements 12 kann wieder gegen die Außenseite 22 des ersten Teleskopelements 4 drücken.

Wenn das Schutzdach 13 jedoch ganz eingefahren werden soll, so muss das Rastelement 12 in eine Einfahrposition gebracht werden.

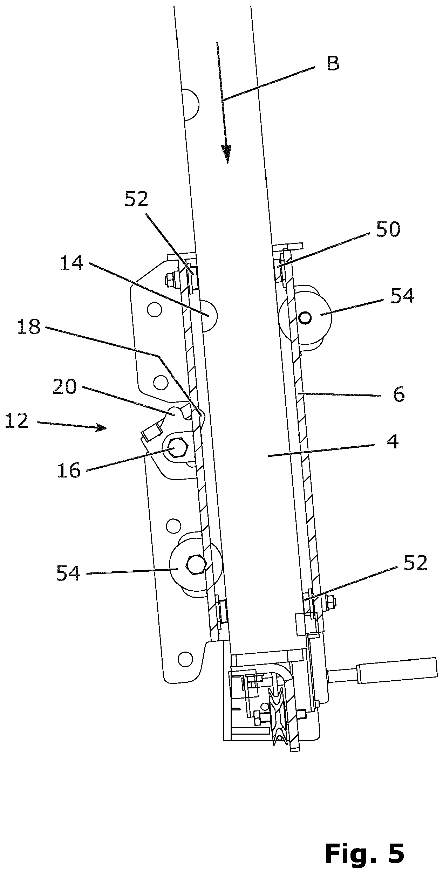

Diese ist in Fig. 5 dargestellt. Dafür wird zunächst das erste Teleskopelement 4 wieder in die zweite Richtung C gegenüber dem zweiten Teleskopelement 6 bewegt. Dadurch schwenkt, wie bereits beschrieben, der erste Teil 18 des Rastelements 12 aus der jeweiligen Aussparung 14 heraus und der zweite Teil 20 des Rastelements 12 drückt nicht mehr gegen die Außenseite 22. Sofern dann jedoch das Schutzdach 13 ganz eingeschwenkt werden soll, wird das Verstellelement 8 derart betätigt, dass das Rastelement 12 weiter in die Schwenkrichtung 40 verschwenkt bleibt. Dies kann manuell oder auch durch einen Motor geschehen. Die Einfahrposition ist in Fig. 5 dargestellt. In diesem Fall ist das erste Teil 18 des Rastelementes 12 als auch der zweite Teil 20 des Rastelements 12 von der Außenseite 22 des ersten Teleskopelements 4 weggeschwenkt. Das erste Teleskopelement 4 kann dann mit Spiel in dem zweiten Teleskopelement 6 geführt werden und Teleskopelement 4 kann in die erste Richtung B geführt werden, was dazu führt, dass das Schutzdach 13 eingefahren werden kann.

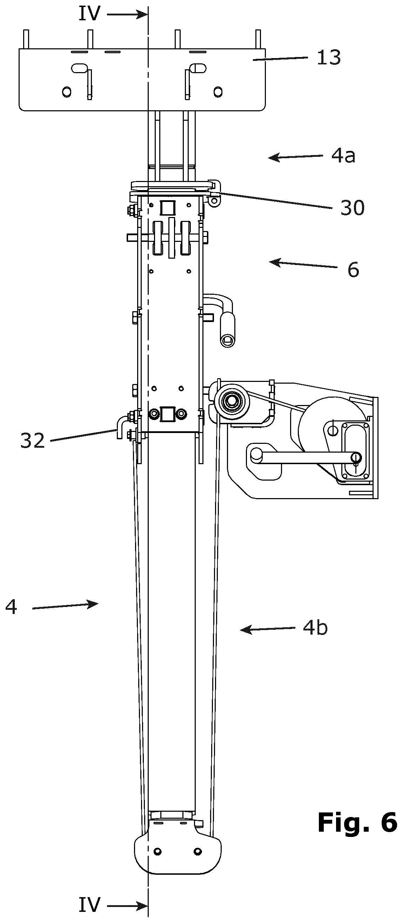

In Fig. 6 ist beispielsweise das Schutzdach 13 oder ein Teil des Schutzdachs 13 in der eingefahrenen Position dargestellt. Der Teil 4a des ersten Teleskopelements 4 ist auf der Seite 30 des zweiten Teleskopelements 6 relativ klein wohingegen der Teil 4b des ersten Teleskopelements 4 auf der zweiten Seite 32 des zweiten Teleskopelements 6 relativ groß ist.

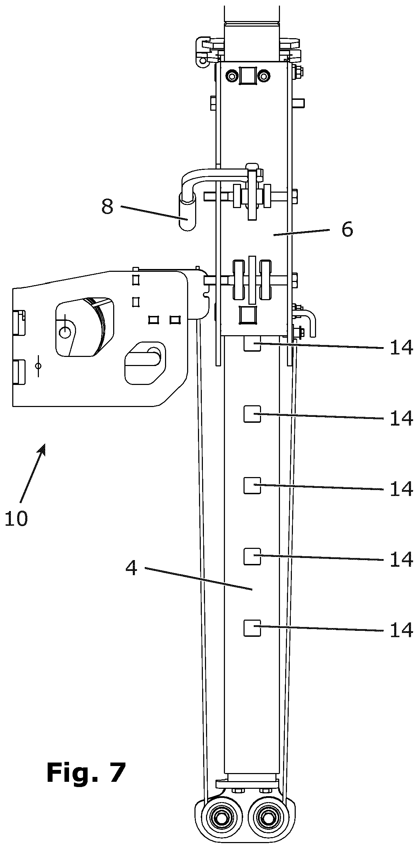

In Fig. 7 ist eine andere Ansicht dargestellt, aus der gezeigt wird, dass mehrere Aussparungen 14 in dem ersten Teleskopelement 4 vorgesehen sind, in die der erste Teil 18 des Rastelements 12 verschwenkt werden kann. Auf diese Weise kann das Schutzdach 13 in mehreren Höhen arretiert werden. Die Kontur des Rastelements 12 sowie des ersten Teils 18 des Rastelements 12 und des zweiten Teils 20 des Rastelements 12 sowie die Position der Schwenkachse 16 wird durch Versuche jeweils bei bestimmten Maschinen ermittelt, dabei muss sichergestellt sein, dass der erste Teil 18 des Rastelements 12 in die Aussparung 14 verschwenken kann und in der eingeschwenkten Position der zweite Teil 20 des Rastelements 12 gegen die Außenseite 22 des ersten Teleskopelements 4 drücken kann, und dass der erste Teil 18 des Rastelements 12 bei Bewegung des ersten Teleskopelements 4 in die zweite Richtung C aus der Aussparung 14 herausgeschwenkt werden kann. Auch wird durch Versuche ermittelt, wie groß der Abstand zwischen dem ersten Teil 18 und dem zweiten Teil 20 des Rastelements 12 und der Schwenkachse 16 sein muss, damit der zweite Teil 20 in eingeschwenkter Position mit ausreichend großer Kraft gegen das erste Teleskopelement 4 drücken kann, so dass es nicht mehr oder in vermindertem Maße zu Schwingungen und Klappern kommt.

## Patentansprüche

1. Baumaschine (1) zum Bearbeiten eines Bodenbelags, mit
- einem von Fahreinrichtungen (3) getragenen Maschinenrahmen (5),
- einem an dem Maschinerahmen (5) angeordneten Bedienstand (7) und ein an dem Bedienstand (7) angeordnetes mit Hilfe einer Teleskopführungseinheit (2) höhenverstellbares Schutzdach (13),
- wobei die Teleskopführungseinheit (2) zumindest ein erstes Teleskopelement (4) und ein zweites Teleskopelement (6) aufweist, wobei das erste Teleskopelement (4) zumindest teilweise in dem zweiten Teleskopelement (6) führbar ist,
- zumindest einer Antriebseinrichtung (10) zum Auf- und Abbewegen des Schutzdachs (13) durch Bewegen des ersten Teleskopelements (4) gegenüber dem zweiten Teleskopelement (6),
**dadurch gekennzeichnet,**
**dass** zumindest eine Aussparung (14) in dem ersten Teleskopelement (4) und
zumindest ein Rastelement (12) vorgesehen sind, wobei das Rastelement (12) um eine Schwenkachse (16) am zweiten Teleskopelement (6) schwenkbar angeordnet ist und derart geformt ist, dass durch Bewegen des ersten Teleskopelements (4) gegenüber dem zweiten Teleskopelement (6) in eine erste Richtung (B) ein erster Teil (18) des Rastelements (12) in die Aussparung (14) verschwenkbar ist und ein zweiter Teil (20) des Rastelements (12) von außen gegen die Außenseite (22) des ersten Teleskopelements (4) drückt.

2. Baumaschine nach Anspruch 1, **dadurch gekennzeichnet, dass** in der eingerasteten Position der erste Teil (18) des Rastelements (12) in der Aussparung (14) ist und der zweite Teil (20) des Rastelements (12) derart gegen das erste Teleskopelement (4) drückt, dass das erste Teleskopelement (4) in dem zweiten Teleskopelement (6) verspannbar ist.

3. Baumaschine nach Anspruch 1 oder 2, **dadurch gekennzeichnet, dass** zum Verstellen des ersten Teleskopelements (4) gegenüber dem zweiten Teleskopelement (6) das Rastelement (12) in eine Verstellposition verschwenkbar ist, in der einerseits der erste Teil (18) des Rastelements (12) aus der Aussparung (14) herausgeschwenkt ist und der zweite Teil (20) des Rastelements (12) nicht gegen die Außenseite (22) des ersten Teleskopelements (4) drückt, so dass das erste Teleskopelement (4) innerhalb des zweiten Teleskopelement (6) mit Spiel führbar ist.

4. Baumaschine nach einem der Ansprüche 2 oder 3, **dadurch gekennzeichnet, dass** zum Verschwenken des Rastelements (12) von der eingerasteten Position in die Verstellposition der erste Teil (18) des Rastelements (12), die Schwenkachse (16) und der zweite Teil (20) des Rastelements (12) derart zueinander angeordnet sind und der erste Teil (18) des Rastelement (12) eine derartige Kontur aufweist, dass durch Bewegen des ersten Teleskopelements (4) gegenüber dem zweiten Teleskopelement (6) in eine der ersten Richtung (B) entgegengesetzte zweite Richtung (C) der erste Teil (18) des Rastelements (12) aus der Aussparung (14) herausschwenkt und in die Verstellposition verschwenkt.

5. Baumaschine nach einem der Ansprüche 2 bis 4, **dadurch gekennzeichnet, dass** zum Verschwenken des Rastelements (12) von der Verstellposition in die eingerastete Position das erste Teleskopelement (4 gegenüber dem zweiten Teleskopelement (6) in die erste Richtung (B) bewegbar ist und der erste Teil (18) des Rastelements (12), sobald das Rastelement (12) auf der Höhe einer Aussparung (14) ist, aufgrund des Eigengewichts und/oder aufgrund einer Federkraft eines Federelements sich in die Aussparung (14) verschwenkt.

6. Baumaschine nach einem der Ansprüche 1 bis 5, **dadurch gekennzeichnet, dass** ein Verstellelement (8), das vorzugsweise ein Hebelelement ist, mit dem Rastelement (12) verbunden ist, mit dem das Rastelement (12) von dem ersten Teleskopelement (4) in eine Einfahrposition wegschwenkbar ist, bei der auch bei Bewegen des ersten Teleskopelements (4) in die erste Richtung (B) der erste Teil (18) des Rastelements (12) nicht in die Aussparung (14) verschwenkt.

7. Baumaschine nach einem der Ansprüche 1 bis 6, **dadurch gekennzeichnet, dass** die erste Richtung (B), in der das erste Teleskopelement (4) bewegbar ist, die gleiche Richtung ist, in die im Wesentlichen die Gewichtskraft wirkt, so dass in der eingerasteten Position die Gesamtgewichtskraft des ersten Teleskopelements (4) und des mit diesem verbunden Schutzdach auf den ersten Teil (18) des Rastelements (12) einwirkt und das Rastelement (12) in eine solche Richtung verschwenkt, dass der zweite Teil (20) des Rastelementes (12) auf die Außenseite des ersten Teleskopelements (4) drückt.

8. Baumaschine nach einem der Ansprüche 1 bis 7, **dadurch gekennzeichnet, dass** innerhalb des zweiten Teleskopelements (6) zumindest ein Führungselement (50, 52, 54) vorgesehen ist, das das erste Teleskopelement (4) in dem zweiten Teleskopelement (6) führt.

9. Baumaschine nach Anspruch 8, **dadurch gekennzeichnet, dass** mittels des zumindest einen Führungselements (52) das Spiel einstellbar ist, mit dem das erste Teleskopelement (4) in dem zweiten Teleskopelement (6) führbar ist.

10. Baumaschine nach Anspruch 8 oder 9, **dadurch gekennzeichnet, dass** das zumindest eine Führungselemente eine Gleitführung (50, 52) und/oder Führungsrolle (54) ist.

11. Baumaschine nach einem der Ansprüche 1 bis 10, **dadurch gekennzeichnet, dass** das Schutzdach (13) vorzugsweise in Bezug zu einer Längsachse des ersten Teleskopelements (4) versetzt angeordnet ist.

12. Baumaschine nach einem der Ansprüche 1 bis 9, **dadurch gekennzeichnet, dass** das erste und/oder zweite Teleskopelement (4,6) Vierkantrohre sind.

## Claims

1. Construction machine (1) for working a ground pavement, comprising
- a machine frame (5) supported by travelling devices (3),
- an operator platform (7) arranged on the machine frame (5), and a protective canopy (13), adjustable in height by means of a telescopic guide unit (2), arranged on the operator platform (7),
- wherein the telescopic guide unit (2) comprises at least one first telescopic element (4) and one second telescopic element (6), wherein the first telescopic element (4) is at least partially guidable in the second telescopic element (6),
- at least one driving device (10) for moving the protective canopy (13) up and down by means of moving the first telescopic element (4) relative to the second telescopic element (6),
**characterized in that**
at least one recess (14) in the first telescopic element (4) and at least one latching element (12) are provided, wherein the latching element (12) is arranged to pivot about a pivoting axis (16) on the second telescopic element (6) and is shaped in such a fashion that, by means of moving the first telescopic element (4) relative to the second telescopic element (6) in a first direction (B), a first part (18) of the latching element (12) is pivotable into the recess (14) and a second part (20) of the latching element (12) presses against the outer side (22) of the first telescopic element (4) from outside.

2. Construction machine in accordance with claim 1, **characterized in that**, in the latched-in position, the first part (18) of the latching element (12) is in the recess (14), and the second part (20) of the latching element (12) presses against the first telescopic element (4) in such a fashion that the first telescopic element (4) is lockable in place in the second telescopic element (6).

3. Construction machine in accordance with claim 1 or 2, **characterized in that**, for the purpose of adjusting the first telescopic element (4) relative to the second telescopic element (6), the latching element (12) is pivotable into an adjustment position in which, on the one hand, the first part (18) of the latching element (12) is pivoted out of the recess (14), and the second part (20) of the latching element (12) does not press against the outer side (22) of the first telescopic element (4), so that the first telescopic element (4) is guidable with play in the second telescopic element (6).

4. Construction machine in accordance with one of the claims 2 or 3, **characterized in that**, for the purpose of pivoting the latching element (12) from the latched-in position into the adjustment position, the first part (18) of the latching element (12), the pivoting axis (16) and the second part (20) of the latching element (12) are arranged relative to each other in such a fashion, and the first part (18) of the latching element (12) exhibits such a contour that, by means of moving the first telescopic element (4) relative to the second telescopic element (6) in a second direction (C) opposite to the first direction (B), the first part (18) of the latching element (12) pivots out of the recess (14) and pivots into the adjustment position.

5. Construction machine in accordance with one of the claims 2 to 4, **characterized in that**, for the purpose of pivoting the latching element (12) from the adjustment position into the latched-in position, the first telescopic element (4) is movable relative to the second telescopic element (6) in the first direction (B), and the first part (18) of the latching element (12), once the latching element (12) is at the height of a recess (14), pivots into the recess (14) as a result of the self-weight and/or as a result of a spring force of a spring element.

6. Construction machine in accordance with one of the claims 1 to 5, **characterized in that** an adjustment element (8), which is preferably a lever element, is connected to the latching element (12), by means of which the latching element (12) is pivotable away from the first telescopic element (4) into a retract position in which, even during movement of the first telescopic element (4) in the first direction (B), the first part (18) of the latching element (12) does not pivot into the recess (14).

7. Construction machine in accordance with one of the claims 1 to 6, **characterized in that** the first direction (B) in which the telescopic element (4) is movable is the same direction in which, essentially, the weight force acts, so that, in the latched-in position, the total weight force of the first telescopic element (4) and the protective canopy connected to the same acts on the first part (18) of the latching element (12) and pivots the latching element (12) in such a direction that the second part (20) of the latching element (12) presses on the outer side of the first telescopic element (4).

8. Construction machine in accordance with one of the claims 1 to 7, **characterized in that** at least one guide element (50, 52, 54) is provided in the second telescopic element (6), which guides the first telescopic element (4) in the second telescopic element (6).

9. Construction machine in accordance with claim 8, **characterized in that** the play with which the first telescopic element (4) is guidable in the second telescopic element (6) is adjustable by means of the at least one guide element (52).

10. Construction machine in accordance with claim 8 or 9, **characterized in that** the at least one guide element is a sliding guide (50, 52) and/or guide roller (54).

11. Construction machine in accordance with one of the claims 1 to 10, **characterized in that** the protective canopy (13) is preferably arranged at an offset relative to a longitudinal axis of the first telescopic element (4).

12. Construction machine in accordance with one of the claims 1 to 9, **characterized in that** the first and/or second telescopic element (4, 6) are square tubes.

## Revendications

1. Engin de chantier (1) pour le traitement d'un revêtement de sol, doté
- d'un châssis de machine (5) porté par des dispositifs de conduite (3),
- d'un poste de commande (7) disposé sur le châssis de machine (5) et d'un toit de protection (13) disposé sur le poste de commande (7) et réglable en hauteur à l'aide d'une unité de guidage télescopique (2),
- dans lequel l'unité de guidage télescopique (2) comporte au moins un premier élément télescopique (4) et un deuxième élément télescopique (6), dans lequel le premier élément télescopique (4) peut être guidé au moins partiellement dans le deuxième élément télescopique (6),
- d'au moins un dispositif d'entraînement (10) destiné à faire monter et descendre le toit protecteur (13) par déplacement du premier élément télescopique (4) par rapport au deuxième élément télescopique (6),
**caractérisé**
**en ce que** sont prévus au moins un évidement (14) dans le premier élément télescopique (4) et au moins un élément de cliquet (12), dans lequel l'élément de cliquet (12) est disposé sur le deuxième élément télescopique (6) de manière pivotante autour d'un axe de pivot (16) et est formé de telle sorte que par déplacement du premier élément télescopique (4) par rapport au deuxième élément télescopique (6) dans une première direction (B) une première partie (18) de l'élément de cliquet (12) peut pivoter dans l'évidement (14) et une deuxième partie (20) de l'élément de cliquet (12) appuie de l'extérieur sur la face externe (22) du premier élément télescopique (4).

2. Engin de chantier selon la revendication 1, **caractérisé en ce que** dans la position enclenchée la première partie (18) de l'élément de cliquet (12) est dans l'évidement (14) et la deuxième partie (20) de l'élément de cliquet (12) appuie sur le premier élément télescopique (4) de telle sorte que le premier élément télescopique (4) est serrable dans le deuxième élément télescopique (6).

3. Engin de chantier selon la revendication 1 ou 2, **caractérisé en ce que** pour le réglage du premier élément télescopique (4) par rapport au deuxième élément télescopique (6) l'élément de cliquet (12) peut pivoter dans une position de réglage, où d'un côté la première partie (18) de l'élément de cliquet (12) est pivotée hors de l'évidement (14) et la deuxième partie (20) de l'élément de cliquet (12) n'appuie pas sur la face externe (22) du premier élément télescopique (4), de sorte que le premier élément télescopique (4) peut être guidé avec du jeu à l'intérieur du deuxième élément télescopique (6).

4. Engin de chantier selon l'une des revendications 2 ou 3, **caractérisé en ce qu'**afin de faire pivoter l'élément de cliquet (12) de la position enclenchée à la position de réglage, la première partie (18) de l'élément de cliquet (12), l'axe de pivot (16) et la deuxième partie (20) de l'élément de cliquet (12) sont disposés l'un par rapport à l'autre à cet effet et la première partie (18) de l'élément de cliquet (12) comporte un contour tel que, par déplacement du premier élément télescopique (4) par rapport au deuxième élément télescopique (6) dans une deuxième direction (C) opposée à la première direction (B), la première partie (18) de l'élément de cliquet (12) pivote hors de l'évidement (14) et dans la position de réglage.

5. Engin de chantier selon l'une des revendications 2 à 4, **caractérisé en ce qu'**afin de faire pivoter l'élément de cliquet (12) de la position de réglage à la position enclenchée le premier élément télescopique (4) peut être déplacé dans la première direction (B) par rapport au deuxième élément télescopique (6) et la première partie (18) de l'élément de cliquet (12) se pivote dans l'évidement (14) en raison du poids propre et/ou en raison d'une force de ressort d'un élément de ressort, pour autant que l'élément de cliquet (12) soit à la hauteur d'un évidement (14) .

6. Engin de chantier selon l'une des revendications 1 à 5, **caractérisé en ce qu'**un élément de réglage (8), lequel est de préférence un élément de levier, est relié à l'élément de cliquet (12), avec lequel l'élément de cliquet (12) peut être pivoté par le premier élément télescopique (4) dans une position d'introduction, pour laquelle la première partie (18) de l'élément de cliquet (12) ne pivote pas dans l'évidement (14) même en cas de déplacement du premier élément télescopique (4) dans la première direction (B) .

7. Engin de chantier selon l'une des revendications 1 à 6, **caractérisé en ce que** la première direction (B) dans laquelle le premier élément télescopique (4) peut être déplacé, est la même direction que celle dans laquelle agit sensiblement la gravité, de sorte que dans la position enclenchée la gravité totale du premier élément télescopique (4) et du toit de protection relié à celui-ci s'exerce sur la première partie (18) de l'élément de cliquet (12) et pivote l'élément de cliquet (12) dans une direction telle que la deuxième partie (20) de l'élément de cliquet (12) appuie sur la face externe du premier élément télescopique (4).

8. Engin de chantier selon l'une des revendications 1 à 7, **caractérisé en ce qu'**au moins un élément de guidage (50, 52, 54) est prévu à l'intérieur du deuxième élément télescopique (6) et guide le premier élément télescopique (4) dans le deuxième élément télescopique (6).

9. Engin de chantier selon la revendication 8, **caractérisé en ce que** le jeu avec lequel le premier élément télescopique (4) peut être guidé dans le deuxième élément télescopique (6) est réglable au moyen d'au moins un élément de guidage (52).

10. Engin de chantier selon la revendication 8 ou 9, **caractérisé en ce que** l'au moins un élément de guidage est une glissière de guidage (50, 52) et/ou un rouleau de guidage (54).

11. Engin de chantier selon l'une des revendications 1 à 10, **caractérisé en ce que** le toit de protection (13) est de préférence disposé en décalage par rapport à un axe longitudinal du premier élément télescopique (4).

12. Engin de chantier selon l'une des revendications 1 à 9, **caractérisé en ce que** le premier et/ou le deuxième élément télescopique (4, 6) sont des tubes carrés.
